(19) 

**Europäisches Patentamt**
**European Patent Office**
**Office européen des brevets**

(11)　**EP 4 701 030 A1**

(12)　# EUROPEAN PATENT APPLICATION

(43) Date of publication:
**25.02.2026　Bulletin 2026/09**

(21) Application number: **24195556.6**

(22) Date of filing: **21.08.2024**

(51) International Patent Classification (IPC):
*H02J 7/00* (2026.01)　　　*H02J 7/34* (2006.01)
*H02J 3/36* (2026.01)　　　*H02J 3/32* (2026.01)
*H02M 7/483* (2007.01)

(52) Cooperative Patent Classification (CPC):
**H02J 7/50; H02J 3/32; H02J 3/36; H02J 7/345;**
**H02M 7/4835**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Hitachi Energy Ltd**
**8050 Zürich (CH)**

(72) Inventors:
• **Alves, Roberto**
**722 14 Västerås (SE)**

• **Ansari, Mohd Shadab**
**722 16 Västerås (SE)**
• **Dijkhuizen, Frans**
**726 31 Skultuna (SE)**
• **Gohil, Ghanshyamsinh Vijaysinh**
**Apex 27502, NC (US)**
• **Johansson, Nicklas**
**722 46 Västerås (SE)**
• **Khan, Akif Zia**
**31-416 Krakow (PL)**
• **Salinas, Ener**
**722 10 Västerås (SE)**

(74) Representative: **AWA Sweden AB**
**Box 5117**
**200 71 Malmö (SE)**

(54)　**A DC INTEGRATED ENERGY STORAGE SYSTEM FOR HYBRID AC/DC AND DC POWER SYSTEMS**

(57)　The present disclosure relates an energy supporting device (100) for a power transmission system, the energy supporting device (100) comprising: a first energy supporting arrangement (101) including at least a first string (1011) of two or more cells (1010) connected in series; a second energy supporting arrangement (102) including at least a second string (1021) of two or more cells (1020) connected in series, wherein said first string (1011) and said second string (1021) are at least electrically connectable in series, wherein each cell of the second string (1021) comprises a power electronics building block (PEBB), wherein the energy supporting device (100) is configured to regulate voltage in the energy supporting device (100) at least temporarily by means of one or more cells of the second string (1021) when said energy supporting device (100) is operated in one of said at least one charging mode. A power transmission system, a method of providing energy support for a power transmission system, and a control device are also provided.

Fig. 3a

**Description**

Technical Field

The present disclosure relates an energy supporting device for a power transmission system. The present disclosure further relates to a power transmission system, a method of providing energy support for a power transmission system, and a control device thereof.

Background

The growth of renewable energy is fueled by a plurality of factors, such as falling cost, ambitious decarbonization goals set by major countries, technology advancement, and energy security. High renewable energy penetration comes with two major challenges: frequency stability and system efficiency.

Frequency stability refers to the ability of an electrical power system to maintain a consistent and steady frequency after being subjected to event, leading to major generation and load mismatch. The Rate of Change of Frequency (RoCoF) after the disturbance is a function of the combined inertia of the on-line assets and the magnitude of the change in power. Due to the on-going trend of retiring fossil fuel-based generation and replacing them by the Inverter-based Resources (IBRs), system inertia is reducing and may reach critical inertia. Critical inertia is defined as the minimum inertia level at which the system can be operated reliably without requiring any modifications in the existing frequency control practices.

System efficiency is also an important factor. Many emerging renewable sources and loads are based on DC or variable frequency AC. Integrating these sources with the electrical power system through DC integration avoids multiple conversion stages and improves system efficiency. Therefore, the hybrid AC/DC systems are becoming prevalent.

To improve the frequency stability of the low inertia hybrid AC/DC grid, energy storage systems should preferably be improved to provide inertia support and fast frequency response provision. Electrochemical energy storage systems are becoming cost-effective and provide an efficient technology. These solutions are based on DC in nature and their integration with the DC system of the hybrid AC/DC system improves conversion efficiency and reduces cost by avoiding multiple conversion stages.

An energy storage system, ESS, comprises energy storage modules (e.g., batteries) for storing energy to be released when needed at a later time. The energy storage modules are typically arranged in configurations of series- and/or parallel connected circuits. An ESS may also incorporate fail-safe solutions for handling a fault in the ESS to mitigate performance loss and/or prevent damage of an affected component. Depending on application, fail-safe solutions may involve protecting and/or bypassing the affected component.

The DC integrated ESS should preferably offer required flexibility to regulate power consumption/absorption from the power system in a reliable and cost-effective manner. The control flexibility is offered by the DC-DC power electronics converter. An overview of the different DC-DC converter topologies can be seen in Paez et al ("Overview of DC-DC Converters Dedicated to HVDC Grids". Juan David Paez, David Frey, Jose Maneiro, Seddik Bacha and Piotr Dworakowski. IEEE TRANSACTIONS ON POWER DELIVERY, VOL. 34, NO. 1, FEBRUARY 2019). The energy supporting device disclosed in WO2022/258141 A1 is shown in Figure 1 (DESS: Distributed Energy Storage System). The energy supporting device can consume/supply energy to the grid. It consists of a series connection of cells and a resistor. A cell consists of an energy storage module and a full bridge cell (controlled ESS cells), where the full bridge cell is controlled to regulate charging, discharging, and bypassing of the energy storage module. The use of full bridge cells offers control flexibility. However, it adds to the cost and increases component count of the entire system, impacting reliability.

In view of the above, it is of interest to provide a solution which alleviates at least some of the problems of current ESS solutions.

Summary

It is an object of the present disclosure to provide an improved solution that alleviates the mentioned drawbacks with present solutions. This and other objects which will be implicitly and explicitly detailed in the following disclosure is/are solved by one or more of the inventions defined in the claims. Additional advantageous embodiments are described in the following.

According to a first aspect of the present disclosure, an energy supporting device for a power transmission system, is provided. The energy supporting device comprises: a first energy supporting arrangement including at least a first string of two or more cells connected in series. Each cell of said two or more cells of the first string or said at least a first string is configured to provide a natural cell voltage. The energy supporting device comprises: a second energy supporting arrangement including at least a second string of two or more cells connected in series. Each cell of said two or more cells of the second string or said at least a second string comprises a power electronics building block configured to enable the energy supporting device to provide voltage regulation. Said first string and said second string are at least electrically connectable in series. Said energy supporting device is configured to be operated in: at least one charging mode, in which at least one cell of the first string and/or at least one cell of the second string are/is receiving electrical energy from the power transmission system, and an energy releasing mode, in which at least one cell of the first string and/or at least one cell of the second string are/is discharging electrical energy to the power transmission system. The energy supporting device is configured to provide said voltage regulation at least temporarily when said energy supporting device is operated in at least one of said at least one charging mode.

In the context of the application, a natural cell voltage refers to the voltage across terminals of a cell, thereby indicating a state of charge of said cell, or, in other words, an internal cell voltage of said cell. The natural cell voltage thus varies with the internal cell voltage. The natural cell voltage and internal cell voltage differs in that the natural cell voltage is affected by internal resistance of the cell, such as internal resistance of a control circuit for bypassing said cell. By means of said natural cell voltage, each of said two or more cells of the at least a first string may be configured to contribute to an output voltage of the energy supporting device.

Since each cell of said two or more cells of the second string is provided with a power electronics building block, each of said cells, or the second energy supporting arrangement as a whole, may be seen as being adapted with a distributed energy storage system, DESS, topology. Moreover, since each cell of said two or more cells of the first string is configured to provide a natural cell voltage, each cell of said cells, or the first energy supporting arrangement as a whole, may be seen as being adapted with a centralized energy storage system, CESS, topology. Each cell of said two or more cells of the at least a first string may be configured as an unregulated cell. Each cell of said two or more cells of the at least a first string may be provided without a power electronics building block.

One advantage of the energy supporting device of the present disclosure is that the number of power electronics building blocks and/or switches is significantly lower compared to an energy supporting device configured entirely with distributed energy storage system, DESS, topology with cells of full-bridge configuration. Thus, manufacturing cost is reduced. Moreover, reliability is improved due to the reduced number of switches which may malfunction. Further, due to the reduced number of switches, the need for maintenance, and/or frequency thereof, may be reduced. Further, due to the reduced number of switches, the number of switches appearing in the conduction path are reduced, thus reducing conduction losses.

Moreover, advantageously, current through cells of the first string (with CESS topology) is not chopped to the same degree as with an energy supporting device configured entirely with DESS topology with cells of full-bridge configuration. This allows better utilization of the energy supporting device from uncontrolled cells.

Also, advantageously, the topology of the energy supporting device herein proposed may be made more compact, thus resulting in reduced footprint.

Further, the combination of CESS and DESS topologies allows for desired current control and energy optimization. The cells of the second energy supporting arrangement may provide a controlled voltage source to maintain a desired current/power flow of the energy supporting device. It may also enhance DC voltage stability for power transmission systems. Also, operational flexibility of the power transmission systems may be improved.

The energy supporting device is able to provide energy storage and energy release on the DC side of an existing, or future, power transmission system. By providing an energy supporting device, the power transmission system may provide grid forming and/or virtual synchronous machine, VSM, capability. In other words, a power transmission system, which has at least one energy supporting device connected to a power link of the power transmission system, may provide grid forming and/or VSM capability. Thus, the energy supporting device may accommodate for grid forming and/or VSM capability which is independent to conditions of an alternate current, AC, network which the power transmission system is connected to.

Further, the energy supporting device of the present disclosure may be a DC integrated energy storage system for hybrid AC/DC and DC power systems.

The energy supporting device may further allow for the power transmission system to release, as in feed, generate, discharge or transmit, energy from the energy storage module into onshore grid independently of the level of electrical energy production at the offshore grid, such as the wind speed at an offshore windfarm. Additionally, the consumption of electrical energy in the onshore grid may increase suddenly to a level which a renewable energy source may not be able to provide. The energy supporting device can be discharged into the onshore grid. In other words, the energy supporting device may be configured to act as an energy buffer for the onshore grid. Thus, the energy supporting device can dissipate electrical energy from a grid when there is a surplus of electrical energy in the grid, and release electrical energy into the grid when there is a need for additional electrical energy, such as when a power supply source is unexpectedly tripped, or when the renewable energy source is unable to produce enough electrical energy.

The energy supporting device, while in the charging mode, may be configured to absorb a small amount of electrical energy from the power link, wherein the small amount may be less than 5%, or less than 1%, of the electrical energy being transmitted between a first power converter and a second power converter via the power link. Thus, the energy supporting device may be charged over a long period of time, without any significant impact to the transmission of electrical energy between the first and second power converters.

The power transmission system may comprise a plurality of power converters which may be connected in series and/or in parallel. The first and second converters may comprise a plurality of interconnected converters. The power transmission system may be configured for transmitting electrical energy from, for example, a power plant, a wind farm, a solar farm, or another energy generation source, to a grid. Alternatively, the power transmission system may be configured for transmitting electrical energy between two grids, such as between two AC grids.

The switches of the power electronics building block may comprise semiconductor devices. The switches may comprise insulated-gate bipolar transistors, IGBTs. An IGBT may, for example, be an IGBT with an anti-parallel diode or a bi-mode insulated gate transistor, BIGT.

In any charging mode of said at least one charging mode, an energy storage module of at least one cell of the first string and/or the second string may be charged by electrical energy from the power link. The dissipation mode may, alternatively, be understood as a fast energy absorption mode. The energy release mode may, alternatively, be understood as a discharging mode.

In the present disclosure, the term "cell" refers to an arrangement equipped with means to store energy. Said means to store energy is henceforth referred to as an energy storage module.

"Energy storage module" refers to an arrangement comprising at least one energy storage unit. In case said at least one energy storage unit comprises a plurality of energy storage units, said plurality of energy storage units may be electrically connected in parallel or in series, or in any combination thereof. An energy storage unit may be a capacitor, a super-capacitor, a battery, a super-battery.

The term "capacitor" refers to an electronic component which may be configured to store energy between two conducting plates or electrodes, separated by a non-conducting region or a dielectric.

The term "supercapacitor" refers to an electric component configured to store charges at the interface between an electrode and an electrolytic solution which creates a capacitor at each electrode. Supercapacitors may advantageously be used to deliver power much faster than batteries, thereby providing faster energy supporting functionality.

The term "battery" refers to an electronic device that converts chemical energy into electrical energy to provide a static electrical charge for power. Batteries may advantageously be used for their high energy densities, thus providing reduced footprint.

The term "super-battery" refers to an electric component comprising at least one battery and at least one supercapacitor electrically coupled with said at least one battery. Super-batteries may thus provide a combination of said advantages.

The phrase "at least electrically connectable" refers to a first element being electrically connectable to a second element, or that said first element and said second element are electrically connectable by means of a switch or the like which when operated to a closed state, electrically connects the first element with the second element.

The phrase "electrically connected" refers to a first element being electrically connected with a second element, either directly electrically connected with one another or indirectly electrically connected with one another by means of a conductive path provided by some conductive element.

In the context of the application, the term "power" in phrases such as "power transmission system", "power link", "power converter" etc. may refer to a medium voltage direct current, MVDC, or a high voltage direct current, HVDC.

The phrase "medium voltage direct current" and the term "MVDC" are well understood by a person skilled in this technical field. As a non-limiting example, MVDC refers to technology related to DC transmission systems operating in an interval 1 kV to 100 kV.

The phrase "high voltage direct current" and the term "HVDC" are well understood by a persons skilled in this technical field. As a non-limiting example, HVDC may refer to technology related to DC transmission systems operating at >100 kV.

Each cell of said two or more cells of said at least a first string is configured to provide a natural cell voltage. Each cell of said at least a second string comprises a power electronics building block configured to enable the energy supporting device to provide voltage regulation. Further, each cell of said two or more cells of said at least a second string may be configured to provide regulated voltage or natural cell voltage, depending on how the power electronics building block of each cell is controlled. Each cell of said two or more cells of said at least a second string may be configured to operate in regulated voltage mode, in which each cell is configured to provide said regulated voltage. Each cell of said two or more cells of said at least a second string may be configured to operate in a natural cell voltage mode, in which each cell is configured to provide a natural cell voltage. Similarly, each cell of said two or more cells of said at least a first string may be said to be configured to operate in natural cell voltage mode. Each cell of said two or more cells of said at least a first string may be said to be configured without a power electronics building block.

Each cell of said two or more cells of said at least a first string may be configured to operate in a mode selected from a list of modes including: a natural cell voltage mode, optionally a bypassed mode (in which the cell is bypassed), and optionally a disconnected mode (in which the cell is disconnected).

Each cell of said two or more cells of said at least a second string may be configured to operate in a mode selected from a list of modes including: a regulated voltage mode, a natural cell voltage mode, optionally a bypassed mode (in which the cell is bypassed), and optionally a disconnected mode (in which the cell is disconnected).

According to one embodiment, the energy supporting device further comprises: a braking resistor, a bypass switch arranged in parallel with the braking resistor, wherein the parallel arrangement of said braking resistor and said bypass switch is arranged in series with said first energy supporting arrangement and/or said second energy supporting arrangement. Said energy supporting device is configured to operate in: a dissipation mode, in which the bypass switch is in an open state for allowing the braking resistor to dissipate electrical energy from the power transmission system. The braking resistor may comprise a plurality of resistors. The plurality of resistors may be connected in series and/or in parallel. The braking resistor may be electrically connected to an electrical reference potential. An electrical reference potential may be understood as, for example, an electrically ground potential, or a zero potential. The braking resistor may advantageously be used to provide current limitation during a black start (charging from scratch) of the energy supporting device.

The energy supporting device may allow for a power transmission system which is connecting, for example, an offshore wind farm to an onshore grid to absorb energy from the onshore or offshore grid when a need arises, such as when the onshore grid is experiencing an over-frequency. In other words, the energy supporting device may allow for electrical energy absorption, or dissipation, when the onshore grid has a surplus of electrical energy. Dissipation of electrical energy may be performed by the energy supporting device by transmitting electrical energy from the grid through an optional braking resistor of the energy supporting device. Thus, the dissipation of electrical energy may be performed much faster than if the electrical energy would be absorbed by a conventional energy bank, such as a battery. Further, the dissipation of electrical energy may be performed at a higher current and/or voltage than if a conventional energy bank was used. The energy supporting device may thereby provide some inertia for the grids by being able to quickly absorb electrical energy. Thus, the energy supporting device may increase the stability of the grid(s) and the capability to recover from faults and/or disturbances within the grid(s), which may allow for a larger portion, or share, of renewable energy sources connected to the onshore grid.

According to one embodiment, at least one cell of said first energy supporting arrangement comprises: a control circuit configured for enabling isolation and/or discharge and/or bypassing of said at least one cell. Said control circuit may comprise one or more electric components such as at least one switch and/or at least one resistor and/or at least one fuse. The selection of electric component(s) and arrangement thereof may be made depending on desired functionality of said cell.

According to one embodiment, the energy supporting device is further configured to operate in: an idle mode, in which the power electronics building block of at least one cell of the second energy supporting arrangement is configured to block electrical energy from the power transmission system from passing through the energy supporting device. In the idle mode at least some, or all, of the switches of the power electronics building block may be switched off. Thus, the power electronics building block may be in non-conducting state or configuration. The idle mode may alternatively be understood as a blocking mode. In the idle mode, there may not be any current exchange between the energy supporting device and the power link. By providing an energy supporting device which is configured to operate in, and switched to and from, the idle mode, the energy supporting device may be able to, essentially, be disconnected from the power link. Thus, a higher degree of control and/or stability can be achieved with a connected energy supporting device which is able to switch from the idle mode to one of the other modes when the need arises to absorb energy from, dissipate energy from, or release energy to the power link.

According to one embodiment, said power electronics building block has a half-bridge configuration or a full-bridge configuration. Full-bridge configuration may be understood as for example an H-bridge arrangement.

The power electronics building block of a cell may be configured to control the polarity, i.e. direction of current, applied to the energy storage module of the cell. Further, the power electronics building block may be configured to allow bypassing of the energy storage module. The power electronics building block may be configured for arranging the plurality of switches in at least three different configurations, states, or modes of operation. The power electronics building block may be configured for arranging the plurality of switches in three, four, five, or more different configurations, states, or modes of operation. The different configurations may be corresponding to the different modes of the energy supporting device. Thus, the plurality of switches may be in a charging configuration, a dissipation configuration, an energy release configuration and/or an idle configuration. It is to be understood that, by the term "arranging a switch" it is meant that a switch may be arranged in either of a closed state or an opened state. In a closed state, the switch is arranged to permit current flow. In an open state, the switch is arranged to block current flow. In the charging mode, the plurality of switches may be arranged such that a charging current is applied to the energy storage module, thereby charging the energy storage module. In the energy release mode, the plurality of switches may be arranged such that a discharging current, with an opposite direction of the charging current flow flowing through the energy storage module as compared with the current flow in the charging mode, is applied to the energy storage module. In the dissipation mode, the plurality of switches may be arranged such that there is no current flowing through the energy storage module.

The power electronics building block of a cell of the first string and/or the second string may be configured to: in the idle mode, block electrical energy from the power link from passing through the energy supporting device. In the idle mode, the plurality of switches may be arranged such that a voltage potential across the first string and/or the second string is higher than a voltage of the power link. In the idle mode, the plurality of switches of the power electronics building block may be in the opened state. A cell of the first string and/or the second string may further comprise a DC/DC converter. The energy storage module of the cell may be connected to the power electronics building block via the DC/DC converter.

The cell of the first string and/or the second string may further comprise an energy storage module connected between the DC/DC converter and the full-bridge configuration. The energy storage module may be connected in parallel with the DC/DC converter and the full-bridge configuration. The DC/DC converter may be configured to convert the voltage and/or the current of the electrical energy from the power electronics building block, wherein the converted voltage and/or current may be optimized with regards to charging, discharging or releasing energy to, or from, the electrical storage module. Thus, the DC/DC converter may improve the efficiency of the energy supporting device. The energy storage module of a cell may comprise one or more batteries and/or one or more capacitors and/or one or more super-capacitors and/or one or more super-batteries. The one or more batteries and/or one or more capacitors and/or one or more super-capacitors and/or one or more super-batteries may be connected in series and/or in parallel.

According to one embodiment, the power electronics building block includes: an energy storage module at least electrically connectable between a first DC side terminal and a second DC side terminal of the power electronics building block, and/or a cell bypass switch at least electrically connectable between a first AC side terminal and a second AC side terminal. The cell bypass switch enables the one or more power electronics devices of the power electronics building block to be bypassed.

According to one embodiment, at least one cell of said first string and/or at least one cell of said second string comprises an energy storage module, which energy storage module includes at least one of: a capacitor, a super-capacitor, a battery, or a super-battery. The second string (DESS topology) may implement super-capacitors. The first string (CESS topology) may implement super-batteries. In this option state of charge (SOC) balancing is easier and non-chopped current in super-batteries improves their lifetime.

According to one embodiment, the energy supporting device further comprises a circuit breaker at least electrically connectable between a first connection terminal of said energy supporting device and a first auxiliary connection terminal at least electrically connectable between any two cells of said second string or between said first string and said second string. A plurality of auxiliary connection terminals may be provided, each provided between terminals of two cells of said second string or a first cell of said first string and a second cell of said second string, wherein the circuit breaker is at least electrically connectable between a first connection terminal of said energy supporting device and one of said plurality of auxiliary connection terminals. The circuit breaker may be adjustable so as to be electrically connectable between a first connection terminal of said energy supporting device and any one auxiliary connection terminal of said plurality of auxiliary connection terminals.

The energy supporting device may further comprise a control device configured to control the switches of the power electronics building block of the first string and/or the second string and the bypass switch. The energy supporting device may comprise one or more control units. A control unit may be configured to control the switches of the power electronics building block of one or more cells of the first string and/or the second string. For example, the energy supporting device may comprise one control unit. Alternatively, the energy supporting device may comprise a plurality of control units configured for controlling respective one or more cell(s) of the first string and/or the second string. The control unit may be communicatively connected to the power electronics building blocks of cells of the second string and optionally the bypass switch so as to control a switching state of the switches. The control unit may further be configured to sense current and/or voltage at the power electronics building block, the bypass switch and/or the resistor of a cell of the first string and/or the second string, for example by means of a sensor arrangement. The sensor arrangement may be configured to sense the voltage across each cell of the second string so as to allow for the current as well as the cell voltage to be regulated.

The energy supporting device may further comprise an impedance arranged between the first string and/or the second string and the bypass switch. The impedance may comprise a resistor and/or an inductor. The impedance may be configured for regulating the current in the energy supporting device. For example, in the charging mode, some energy storage modules of cells of the first string and/or the second string may be receiving electrical energy from the power link, while the other cells of the first string and/or the second string may be bypassed. Resistance may be used to fine-tune the current through the energy supporting device, which may otherwise be too sensitive to be controlled. By providing an impedance between the first string and/or the second string and the bypass switch, the current may be regulated, or determined, to a more suitable level. Thus, the impedance may increase the stability and/or the controllability of the energy supporting device.

A cell of the first string and/or the second string may comprise a cell bypass switch configured to allow the cell to be bypassed. The cell bypass switch may be configured to bypass the cell in response to a determination that a malfunction has occurred in the cell. Thereby, the cell bypass switch may provide an increased level of protection.

According to a second aspect of the present disclosure, a power transmission system is provided. The power transmission system comprises at least one energy supporting device according to the first aspect or any embodiment thereof, wherein said at least one energy supporting device is at least electrically connectable to said power transmission system so as to be able to operate in: said at least one charging mode, said energy release mode, and, optionally in at least one of: said dissipation mode, and/or said idle mode. The power transmission system may include a first power converter and a second power converter connected to each other via a power link.

The first and second power converter of the power transmission system may comprise a plurality of power converters, wherein the first and second transmission lines may be arranged between respective power converters of the first and second power converters. The first and second transmission lines may comprise transmission lines and/or cables. The power transmission may be configured as a symmetrical monopole power transmission system or a bipolar power transmission system.

The power transmission system may comprise at least two energy supporting devices according to the first aspect or any embodiment thereof. A first one of the energy supporting devices may be connected to a first transmission line of the power link, and a second one of the energy supporting devices may be connected to a second transmission line of the power link.

According to one embodiment, the power transmission system further comprises: a control device configured to control the power electronics building block, and a least one sensor being configured to sense a current and/or a voltage of the power transmission system and being at least communicatively couplable to said control device, wherein the control device is further configured to cause the energy supporting device to operate one of the modes based on the received current and/or voltage of the power transmission system.

The control system may be configured to control the switches of the full-bridge configuration of the first string and/or the second string and the bypass switch via one or more control units of the energy supporting device. The control performed by the control system may be based on a support request from the AC network to which the power transmission system is connected and/or based on sensed conditions at the power link. The control system may be configured as a master and the control unit(s) may be configured as slaves. In other words, the control system may be configured to perform a higher level of control, and the control unit(s) may be configured to perform a lower level of control which may be subject to the higher level of control.

According to a third aspect of the present disclosure, there is provided a method of providing energy support for a power, transmission system, wherein said energy support is provided by means of an energy supporting device according to the first aspect or any embodiment thereof. The method comprises: a step of dissipating a surplus of electrical energy from the power transmission system by operating said energy supporting device in at least one charging mode of said at least one charging mode; and a step of releasing electrical energy to the power transmission system by operating said energy supporting device in said energy releasing mode.

According to one embodiment, said at least one charging mode comprises a first charging mode including: a step of applying a charging voltage to the energy supporting device to charge cells of said first string and cells of said second string; a step of, when cells of said first string have reached a predetermined voltage lower than nominal voltage, bypassing said second string; a step of continuing charging cells of said first string; and a step of stopping said first charging mode when all cells of said first string have been charged to nominal voltage.

According to one embodiment, said at least one charging mode comprises a second charging mode including: a step of providing a first group of cells including a contiguous selection of cells of said second string and a second group of cells including cells of said first string and the cells of the second string not in said first group; a step of bypassing the second group of cells; a step of applying a charging voltage to the energy supporting device to charge the first group of cells to nominal voltage; a step of, when the charging current has reached zero, connecting the second group of cells; a step of charging the second group of cells; a step of stopping said second charging mode when all cells of the first group of cells and the second group of cells have been charged to nominal voltage.

According to one embodiment, wherein at least one cell of said first energy supporting arrangement and/or at least one cell of said second energy supporting arrangement comprises a control circuit configured for enabling isolation and/or discharge and/or bypassing of said at least one cell, said at least one charging mode comprises a third charging mode including: a step of controlling a control circuit of cells of the first string to bypass said cells of the first string; applying a charging voltage to the energy supporting device to charge cells of the second string; a step of, when cells of said second string have been charged to nominal voltage, bypassing said second string; a step of controlling said control circuit of each cell of the first string to connect said cells of the first string; a step of continuing charging said cells of said first string; a step of stopping said third charging mode when all cells of said first string have been charged to nominal voltage.

According to a fourth aspect, a control device is provided. The control device is configured to perform the method according to the third aspect or any embodiment thereof. The control device may comprise monitoring means for monitoring one or more aspects of the energy supporting device, or any sub-system thereof, such as the first energy supporting arrangement and/or the second energy supporting arrangement. Said monitoring means may include at least one sensor configured to sense a current and/or a voltage. The control device may comprise a processing device for processing input from monitoring means and/or a user and/or other forms of input and provide instructions for how to control operation of the energy supporting device, or any sub-system thereof, such as the first energy supporting arrangement and/or the second energy supporting arrangement. The control device may comprise a control signal generating means for generating a control signal based on said instructions to control one or more components of the or any sub-system thereof, such as the first energy supporting arrangement and/or the second energy supporting arrangement. The control device may be configured to receive input from at least one sensor configured to sense a current and/or a voltage of the power transmission system.

According to a fifth aspect, a computer program is provided. The computer program comprises instructions which, when the program is executed by a computer, cause the computer to carry out the method according to the third aspect or any embodiment thereof.

According to a sixth aspect, a computer-readable storage medium is provided. The computer-readable storage medium comprises instructions which, when executed by a computer, cause the computer to carry out the method according to the third aspect or any embodiment thereof.

Effects and features of the second and third and fourth and fifth and sixth aspects are largely analogous to those described above in connection with the first aspect. Embodiments mentioned in relation to the first aspect are largely compatible with the second and third and fourth and fifth and sixth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

Brief Description of the Drawings

The invention will in the following be described in more detail with reference to the enclosed drawings, wherein:

Figs. 1, 2a-2b show an energy supporting device according to a prior art solution;
Fig. 3a shows a schematic illustration of a hybrid energy storage system according to one embodiment of the present disclosure;
Fig. 3b shows a schematic illustration of a hybrid energy storage system according to one embodiment of the present disclosure;
Fig. 4a shows a schematic illustration of a part of a hybrid energy storage system according to one embodiment of the present disclosure;
Fig. 4b shows a schematic illustration of a part of a hybrid energy storage system according to one embodiment of the present disclosure;
Fig. 5a shows a schematic illustration of a part of a hybrid energy storage system according to one embodiment of the present disclosure;
Fig. 5b shows a schematic illustration of a part of a hybrid energy storage system according to one embodiment of the present disclosure;
Fig. 5c shows a schematic illustration of a part of a hybrid energy storage system according to one embodiment of the present disclosure;
Fig. 6 shows a schematic illustration of a hybrid energy storage system according to one embodiment of the present disclosure when electrically connected to an HVDC system;
Fig. 7a shows a current change in terms of ripple in base of 300 MW and in base of 1000 MW with respect to switching frequency for a hybrid energy storage system according to one embodiment of the present disclosure;
Fig. 7b shows minimum current, average current, and maximum current change for a hybrid energy storage system according to one embodiment of the present disclosure;
Fig. 8 shows a schematic illustration of a hybrid energy storage system according to one embodiment of the present disclosure when electrically connected to an HVDC system;
Fig. 9a shows voltage in pu for cells in a centralized energy storage system during a charging process according to a method of controlling a hybrid energy storage system according to one embodiment of the present disclosure;

Fig. 9b shows voltage in pu for cells in a distributed energy storage system during a charging process according to a method of controlling a hybrid energy storage system according to one embodiment of the present disclosure;

Fig. 10 shows a schematic illustration of a hybrid energy storage system according to one embodiment of the present disclosure when electrically connected to an HVDC system;

Fig. 11 shows a flow chart of a method of controlling a hybrid energy storage system according to one embodiment of the present disclosure.

Description of Embodiments

Hereinafter, the principle of the present disclosure will be described with reference to the illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

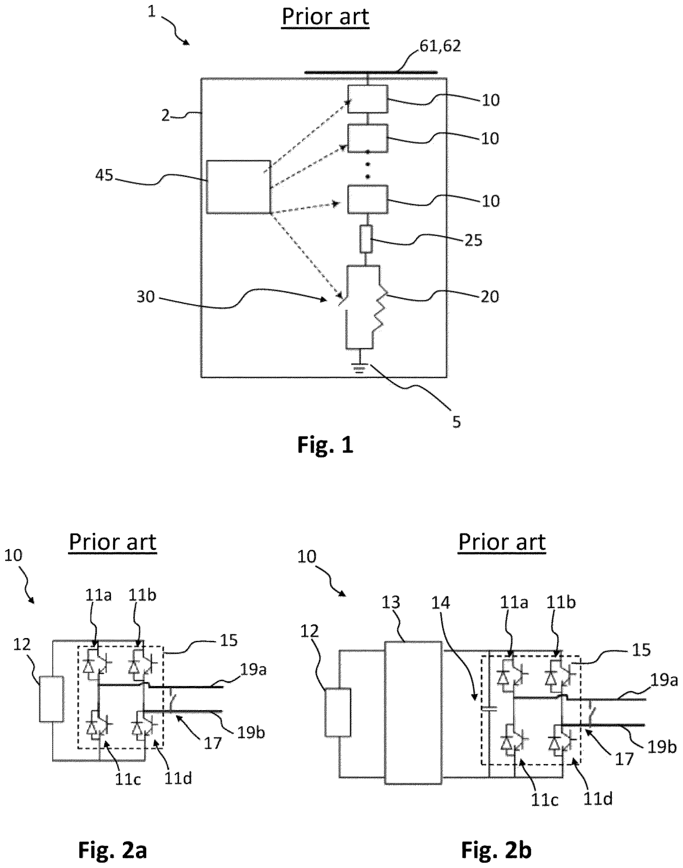

Figs. 1, 2a-2b show an energy supporting device according to a prior art solution disclosed in WO2022/258141 A1. The energy supporting device 1 is disclosed as being able to consume/supply energy to the grid via transmission lines 61, 62. The energy supporting device 1 consists of a series connection of cells 10 and a resistor 20. The energy supporting device comprises a bypass switch 30. The bypass switch 30 is connected in parallel with the resistor, which together are connected between said series connection of cells 10 and an electrical reference potential 5. A control unit 45 is configured to control power switches of full-bridge arrangements of the plurality of cells 10 and the bypass switch 30. The energy supporting device 1 further comprises a casing 2. As shown in Figs. 2a, 2b, each cell consists of an energy storage module 12 and a full bridge arrangement 15, where the full bridge cell is controlled to regulate charging, discharging, and bypassing of the energy storage module 12. Each cell comprises a first connection 19a and a second connection 19b. The full-bridge arrangement 15 comprises four power switches 11a, 11b, 11c, 11d. The cell may further comprise a cell bypass switch 17. A DC/DC converter 13 may be connected between the energy storage module and the full-bridge cell. The use of a full bridge cell provides control flexibility. However, it adds to the cost and increases component count of the entire system (in particular the number of switches being used), impacting reliability.

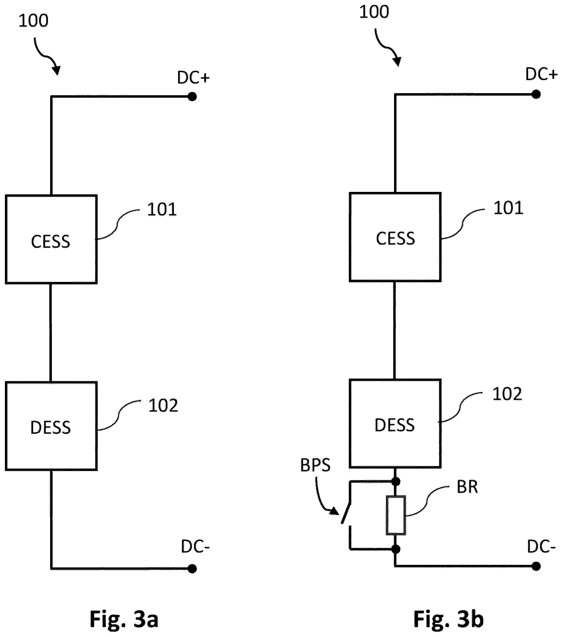

In order to alleviate at least some of the above mentioned disadvantages, an energy supporting device 100 is proposed in the present disclosure, which energy supporting device 100 is for a power transmission system, such as a medium voltage direct current, MVDC, transmission system or a high voltage direct current, HVDC, transmission system. A first exemplary embodiment of said energy supporting device 100 is illustrated in Fig. 3a. The energy supporting device 100 comprises a first energy supporting arrangement 101. The first energy supporting arrangement 101 is adapted as a centralized energy storage system, CESS. The energy supporting device 100 comprises a second energy supporting arrangement 102. The second energy supporting arrangement 102 is adapted as a distributed energy storage system, DESS. Together, the first energy supporting arrangement 101 and the second energy supporting arrangement 102 form a hybrid energy storage system, HESS. Due to the variation of the internal parameters of various energy storage system, ESS, units (capacitors, supercapacitors, batteries, or super batteries) which may be implemented in the energy supporting device 100, it may be necessary to include other elements (such as switches, relays, resistors, fuses, etc.) in parallel with any of said ESS units to maintain a desired voltage distribution and balance of a state of charge (SOC) of the energy supporting device 100. The energy supporting device 100 provides a first terminal DC+ and a second terminal DC-. The first terminal DC+ may be electrically connected to a power transmission system, such as a power link of said power transmission system. The second terminal DC- may be electrically connected to said power link, another energy storage arrangement, or to ground. The energy supporting device 100 is configured to be operated in at least two modes: at least one charging mode in which the energy supporting device 100 receives energy from a power transmission system, and an energy releasing mode in which the energy supporting device 100 releases energy to the power transmission system. The energy supporting device 100 may further be configured to operate in: an idle mode, in which the second energy supporting arrangement 102 is configured to block electrical energy from the power transmission system from passing through the energy supporting device 100.

As a further option, as illustrated in Fig. 3b, the energy supporting device 100 may comprise a braking resistor BR and a bypass switch BPS arranged in parallel with the braking resistor BR. The parallel arrangement of said braking resistor BR and said bypass switch BPS may be arranged in series with said first energy supporting arrangement 101 and/or said second energy supporting arrangement 102. By means of the braking resistor BR and the bypass switch BPS, said energy supporting device 100 may be configured to operate in one additional mode: an energy dissipation mode, in which the bypass switch BPS is in an open state for allowing the braking resistor BR to dissipate electrical energy from the power transmission system.

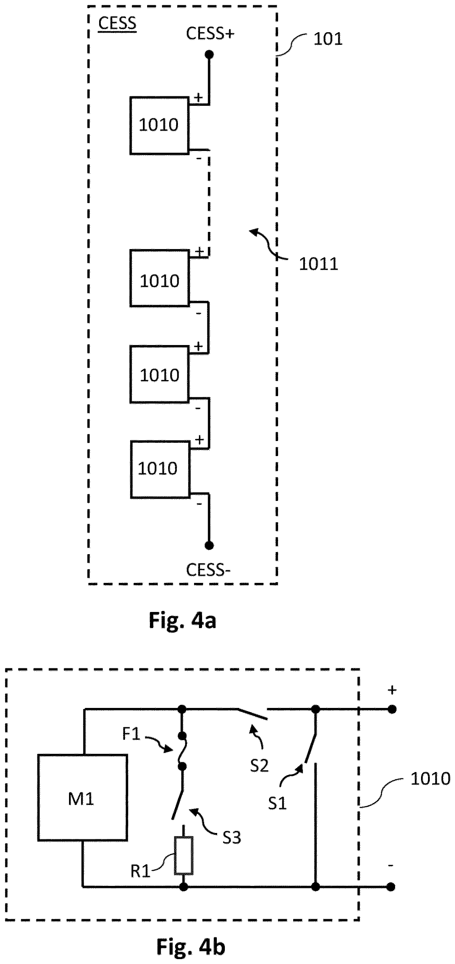

The first energy supporting arrangement 101 is adapted with a centralized energy storage system, CESS. An example of a CESS may be an energy storage bank. The energy storage bank may comprise a plurality of cells (each of which may be referred to as an uncontrolled ESS cell or just a cell in general) connected in series, along with isolation and bypass switch and discharge circuit. Each cell comprises an energy storage module. In Fig. 4a, the first energy supporting arrangement 101 is exemplified with an example design of a CESS, wherein said CESS comprises said first string 1011 of cells 1010, said first string 1011 being at least electrically connectable between a first CESS terminal CESS+ and a second CESS terminal CESS-. Each cell of said first string is configured to provide a natural cell voltage. At least one cell 1010 of the first string 1011 may be adapted with a control circuit configured for enabling isolation and/or discharge and/or bypassing of said at least one cell 1010. As a non-limiting example, all cells 1010 of the first string 1011 may be adapted with such a control circuit. Fig. 4b illustrates an example design of a cell 1010 comprising an energy storage module M1 (e.g., including one or more energy storage units such as a capacitor) and a control circuit arranged to control said isolation and/or discharge and/or bypassing. The control circuit may comprise a first switch S1 for bypassing said energy storage module M1. The control circuit may comprise a second switch S2 for isolating said energy storage module M1. The control circuit may comprise a third switch S3 arranged in series with a first resistor R1 and/or a first fuse F1 for discharging said energy storage module M1. Fig. 4b illustrates an example wherein said third switch S3 is arranged in series with both said first resistor R1 and said first fuse F1. The control circuit may however be adapted in other ways to achieve said functionality or said functionalities.

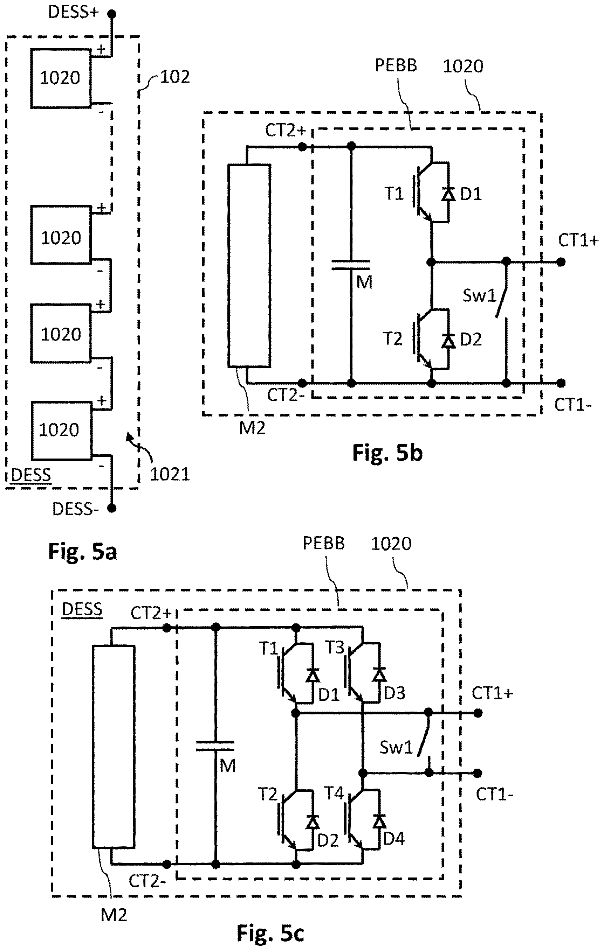

The second energy supporting arrangement 102 has a distributed energy storage system, DESS, topology. An example of a DESS may be a voltage regulator. The goal of the second energy supporting arrangement 102 is to regulate DC voltage at its terminals, and as a result, regulate a current flowing in the energy supporting device 100. Said voltage regulator may comprise series connected energy storage cells (which may be referred to as controlled ESS cells or cells in general). The second energy supporting arrangement 102 includes at least a second string 1021 of two or more cells 1020 connected in series. Fig. 5a illustrates an example design of a DESS, wherein said DESS comprises said second string 1021 of at least two cells 1020 arranged in series. The second string 1021 is at least electrically connectable between a first terminal DESS+ and a second terminal DESS-. The first DESS terminal DESS+ may be at least electrically connectable to the second CESS terminal CESS-. The second DESS terminal DESS- may be electrically connectable to said second terminal DC- or said parallel arrangement of said braking resistor BR and said bypass switch BPS if provided.

In Fig. 5b, a non-limiting example of a cell 1020 of said second string 1021 is illustrated. The cell 1020 comprises a power electronics building block PEBB and an energy storing module (such as an energy storage rack) M2 arranged to be at least electronically connectable to said power electronics building block PEBB via a first secondary terminal CT2+ and a second secondary terminal CT2-. The power electronics building block PEBB is at least electrically connectable to other cells of the second string 1021 via a first primary terminal CT1+ and a second primary terminal CT- or to one of said first terminal DESS+ and said second terminal DESS-. The energy supporting device 100 may be configured to regulate voltage in the energy supporting device 100 by means of said power electronics building block PEBB when said energy supporting device 100 is operated in one of said at least one charging mode. Moreover, a cell bypass switch Sw1 may be provided between the first primary terminal CT1+ and the second primary terminal CT1- so as to enable bypassing of said cell.

The power electronics building block PEBB is not limited to any particular switch topology. As non-limiting examples, the power electronics building block PEBB may comprise two switches in a half-bridge topology or four switches in a full-bridge topology. However, irrespective of the switch topology, switches of the power electronics building block PEBB can be operated on/off at low frequency or can also be operated at higher frequency to generate pulse-width modulated voltage at their terminals. Controlling the insertion or bypass of the cells, through a sorting algorithm, allows regulating the SOC of the energy storage elements. Also, modulating voltages of cells of the second energy supporting arrangement 102 allows current through the energy supporting device to be regulated, thereby impacting said operation modes. Further, the power electronics building block PEBB may include an energy storage module M (exemplified in Figs. 5b-5c as a single capacitor) at least electrically connectable between a first secondary terminal and a second secondary terminal of the power electronics building block.

As a first example, as illustrated in Fig. 5b, the power electronics building block PEBB may include two switches arranged in a half-bridge configuration, so that a first secondary terminal CT2+ and a second secondary terminal CT2- are electrically connectable to said energy storage module M2 and wherein a first primary terminal CT1+ and a second primary terminal CT1- provide terminals for electrically connecting to other cells 1020 of the second string 1021 or to the first DESS terminal DESS+ and the second DESS terminal DESS-. The present disclosure is not limited to any particular design of said first switch and said second switch. A first switch may comprise a first semiconductor device T1. A second switch may comprise a second semiconductor device T2. A first diode D1 may be electrically connected in parallel (e.g., antiparallel) with the first semiconductor device T1. A second diode D2 may be electrically connected in parallel (e.g., antiparallel) with the second semiconductor device T2.

As a second example, as illustrated in Fig. 5c, the power electronics building block PEBB may include four switches arranged in full-bridge configuration. A first switch may comprise a first semiconductor device T1. A second switch may comprise a second semiconductor device T2. A third switch may comprise a third semiconductor device T3. A fourth switch may comprise a fourth semiconductor device T4. A first diode D1 may be electrically connected in parallel (e.g., antiparallel) with the first semiconductor device T1. A second diode D2 may be electrically connected in parallel (e.g., antiparallel) with the second semiconductor device T2. A third diode D3 may be electrically connected in parallel (e.g., antiparallel) with the third semiconductor device T3. A fourth diode D4 may be electrically connected in parallel (e.g., antiparallel) with the fourth semiconductor device T4. As the power electronics building block adapted with full bridge configuration can connect in both polarities (positive or negative voltage), such a configuration provides greater control flexibility than half-bridge configuration.

Generally, cells of the first string 1011 (i.e., uncontrolled cells) and cells of the second string 1021 (i.e., controlled cells) may be adapted in many different ways. As a non-limiting example, at least one cell 1010 of said first string 1011 and/or at least one cell 1020 of said second string 1021 comprises an energy storage module including at least one (or any number) of a capacitor, a super-capacitor, a battery, or a super-battery or any combination thereof. All uncontrolled cells in the first string 1011 may be of the same design. All controlled cells in the second string 1021 may be of the same design.

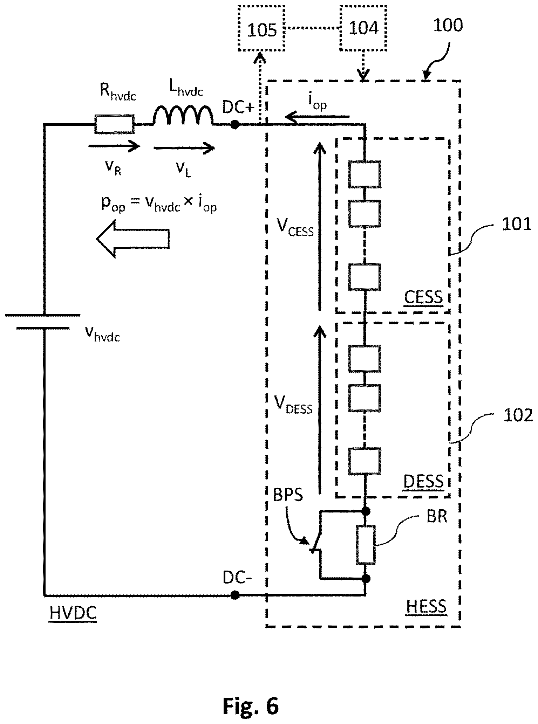

The energy supporting device 100 may be provided to be at least electrically connectable with a power transmission system, such as a medium voltage direct current, MVDC, transmission system or a high voltage direct current, HVDC, transmission system. The power transmission system may comprise at least one energy supporting device 100 according to any embodiment as disclosed in the present disclosure. Said at least one energy supporting device 100 is at least electrically connectable to said power transmission system so as to be able to operate in: said at least one charging mode, said energy release mode, and, optionally in at least one of: said dissipation mode, and/or said idle mode. In Fig. 6, an energy supporting device 100 comprising said first energy supporting arrangement 101 (e.g., a CESS) and said energy supporting arrangement 102 (e.g., a DESS) are electrically connected to a HVDC transmission system. It should however be understood that this is a non-limiting example and the energy supporting device may be configured for an MVDC transmission system. The HVDC transmission system provides an HVDC voltage $V_{hvdc}$. The HVDC transmission system may include a first HVDC converter and a second HVDC converter connected to each other via an HVDC link. The energy supporting device 100 may be electrically connected to a first transmission line of said HVDC link and optionally a second transmission line of said HVDC link. The purpose of the energy supporting device 100 is to be used to deliver or consume energy from the HVDC system. As a non-limiting example, the energy supporting device 100 is configured to be used to deliver or consume energy from the HVDC system for short periods of time. As a non-limiting example, a short period of time may be less than 10 seconds. As a non-limiting example, the energy supporting device 100 is configured to be used to deliver or consume energy from the HVDC system for short periods of time, typically 3 seconds. The energy (power) is available in the cells of the at least a first string 1011 and the at least a second string 1021, which cells comprise an energy storage module including at least one of (or any number and/or combination of) a capacitor, a supercapacitor, a battery, or a super battery. A braking resistor BR is also included to limit current during black start and consume (burn) power if necessary.

The HVDC link may have a resistance $R_{hvdc}$ and an inductance $L_{hvdc}$ which in Fig. 6 are illustrated as a resistor and an inductor respectively. The voltage over said resistance may be $v_r$. The voltage over said inductance may be $v_l$. The voltage over all uncontrolled cells may be $v_{CESS}$. The voltage over all controlled cells may be $v_{DESS}$. Depending on voltage levels, the current $i_{op}$ may flow towards the HVDC transmission system or towards the energy supporting device 100. The power flow may be $p_{op} = v_{hvdc} \times i_{op}$. It should be understood that these parameters may be dependent with respect to time, hence small symbols are used. However, this convention should not be understood as construing any invention of the present disclosure to not be applicable for when said parameters are, at least temporarily, constant over time.

As mentioned, the energy supporting device 100 is operable in a plurality of modes. A first mode includes said at least one charging mode, in which at least one cell 1010 of the first string 1011 (i.e., an uncontrolled cell) and/or at least one cell 1020 of the second string 1021 (i.e., a controlled cell) are/is receiving electrical energy from the HVDC transmission system. A second mode includes said energy releasing mode, in which at least one cell 1010 of the first string 1011 and/or at least one cell 1020 of the second string 1021 are/is discharging electrical energy to the HVDC transmission system. Moreover, a control device 104 may be provided so as to be able to control the energy supporting device 100, such as said switches of the power electronics building block PEBB and any other controllable components of the control device 104. At least one sensor 105 may be provided to sense a current and/or a voltage of an HVDC link. Said at least one sensor 105 may be communicatively coupled to said control device 104. The control device 104 may be configured to cause the energy supporting device to operate in one of the modes discussed in the present disclosure.

In order to quantify and compare the topologies shown e.g., in Fig. 3a vs. the prior art solution shown in Figs. 1, 2a-2b, let's consider a simple illustrative example of 100 kV dc link voltage ($V_{dc}$) of the HVDC transmission system. Presume further that the cells used in the energy supporting device 100 are rated for nominal voltage ($V_{nom}$) of 1 kV and that they discharge down to 80% in a normal operation cycle of energy support. The following analysis is carried out for comparison.

Case I: Cells adapted with half-bridge configuration

The number of cells ($n_{C,DESS}$) and the number of switches ($n_{switches}$) required in DESS-topology of said prior art using cells adapted with half-bridge configuration are:

$$n_{C,DESS} = \frac{V_{dc}}{V_{nom} \times 0.8} = 125$$

$$n_{switches} = 2 \times n_{C,DESS} = 250$$

The number of cells ($n_{C,HESS}$) and the number of switches ($n_{switches}$) required in HESS-topology of the energy supporting device of the present disclosure using cells adapted with half-bridge configuration are, in terms of controlled cells, $n_{c,HESS}$-controlled, and uncontrolled cells, $n_{c,HESS}$-uncontrolled:

$$n_{C,HESS-controlled} = 25, \; n_{C,HESS-uncontrolled} = 100$$

$$n_{switches} = 2 \times n_{C,HESS-controlled} = 50$$

Hence, for half-bridge configuration, it can be seen that the total number of switches $n_{switches}$ required in HESS-topology is 50 which is much less than the number of switches $n_{switches}$ required in DESS-topology.

Case II: Cells adapted with full-bridge configuration

The number of cells ($n_{C,DESS}$) and the number of switches ($n_{switches}$) required in DESS-topology of said prior art using cells adapted with full-bridge configuration are:

$$n_{C,DESS} = \frac{V_{dc}}{V_{nom} \times 0.8} = 125$$

$$n_{switches} = 4 \times n_{C,DESS} = 250$$

The number of cells ($n_{C,HESS}$) and the number of switches ($n_{switches}$) required in HESS-topology of the energy supporting device of the present disclosure when using cells adapted with full-bridge configuration are:

$$n_{C,HESS-controlled} = 25, \; n_{C,HESS-uncontrolled} = 100$$

$$n_{switches} = 4 \times n_{C,HEES-controlled} = 100$$

Hence, for full-bridge configuration, it can be seen that the total number of switches $n_{switches}$ required in HESS-topology is 100 which is much less than the number of switches $n_{switches}$ required in DESS-topology which is 250.

Here, $n_{C,HESS-controlled}$ is the number of distributed cells (i.e., the number of cells in the second energy supporting arrangement 102 (e.g., DESS)) and $n_{C,HESS-uncontrolled}$ is the number of centralized cells (i.e., the number of cells in the first energy supporting arrangement 101 (e.g., CESS)). As is evident, the total number ESS units (cells) ($n_{C,DESS} = n_{C,HESS-controlled} + n_{C,HESS-uncontrolled}$) is the same, but the required number of switches is significantly reduced for both half-bridge and full-bridge cells since some of the cells are replaced by centralized cells. Due to the reduced number of switches, a plurality of advantages are achieved, for instance cheaper manufacturing, smaller footprint, more reliable operation, more stable operation, and less frequent maintenance to name a few.

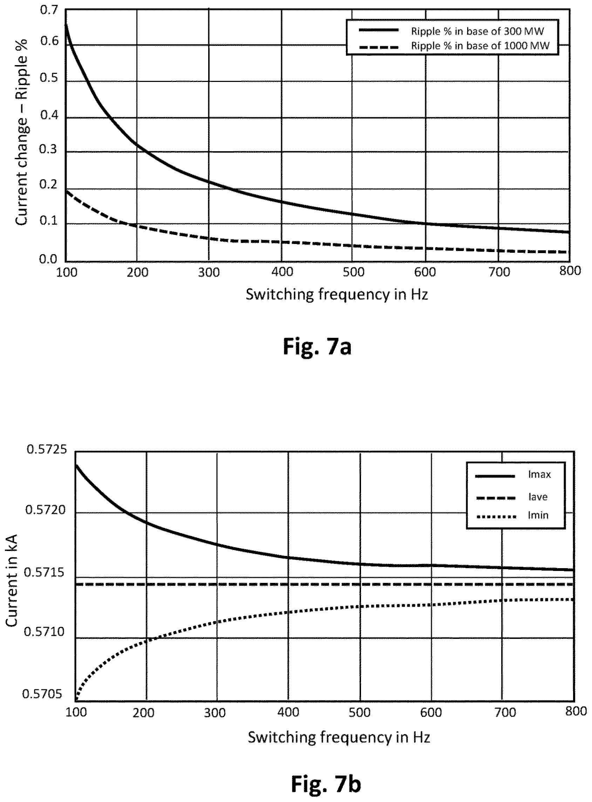

The controlled cells are operated to provide a controlled voltage source to maintain the desired current/power flow. The switching action of controlled cells provides a controlled voltage source with a defined voltage step (equal to the voltage of one cell), which is 1 kV for the above explained example case. Due to this stepped voltage of the second energy supporting arrangement 102, the ESS current experiences ripples, and their magnitude is governed by the voltage step (1 kV) and the rate of switching of controlled cells. In Fig. 7a, which illustrates current change in terms of ripple % in base of 300 MW and in base of 1000 MW, it can be seen that a higher equivalent switching frequency leads to a lower current ripple and lower disturbances in the system. For instance, at 300 Hz, the current ripple is of the order of 0.2%-0.3% in the power base of the converter (300 MW) and much lower in the power base of the HVDC system (1000 MW). Fig. 7b illustrates the trend in current ripple magnitude in kA with respect to the equivalent converter switching frequency, wherein the solid line represents maximum current Imax, the dashed line represents average current Iave, and the dotted line represents minimum current Imin. High switching frequency at cell level corresponds to high equivalent switching frequency at converter level and hence a low magnitude of ESS current ripple. The switching frequency at the converter level is proportional to the switching frequency at the cell level and the number of controlled ESS cells, as shown in the following equations. As is evident, the greater the number of cells, the more the equivalent switching frequency of the converter increases.

a) Prior art topology (DESS)

$$f_{sw}^{cell-lvl} \propto \frac{f_{sw}^{converter-lvl}}{n_{C,DESS}}$$

$$f_{sw}^{cell-lvl} \propto \frac{300}{125} = 2.4 \, Hz$$

b) Topology of present disclosure (HESS)

$$f_{sw}^{cell-lvl} \propto \frac{f_{sw}^{converter-lvl}}{n_{C,HESS}}$$

$$f_{sw}^{cell-lvl} \propto \frac{300}{25} = 12 \, Hz$$

In DC energy storage integration systems, one of the problems is charging from scratch (also referred to as "black start"). In the proposed hybrid topology, HESS, the uncontrolled cells, i.e., the cells of the first string (CESS topology) are connected in series with the controlled cells, i.e., the cells of the second string (DESS topology). To initialize the energy supporting device 100 from the HVDC transmission system, there are at least three different charging modes (which can be used individually or combined in any combination). The three different charging modes are described below.

First charging mode

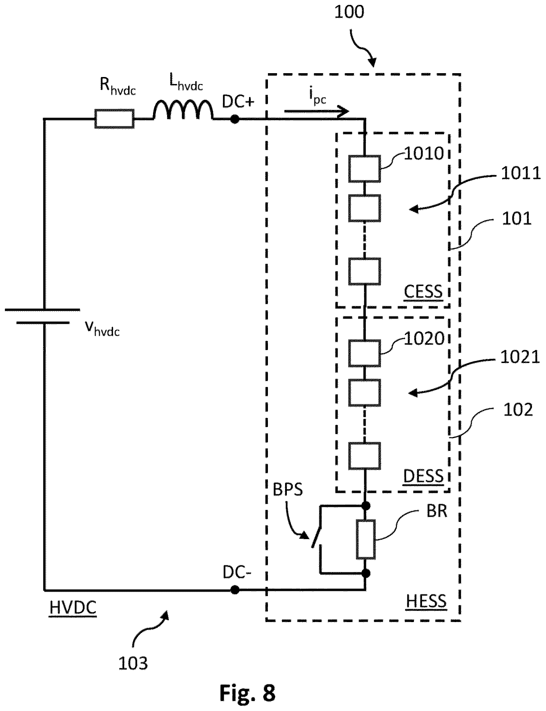

For the first charging mode, nominal voltage for controlled cells and uncontrolled cells may be selected to be different. As a non-limiting example, nominal voltage for controlled cells is selected as 0.8 kV. As a non-limiting example, nominal voltage for uncontrolled cells is selected as 1 kV. The number of controlled cells and the number of uncontrolled cells should be calculated accordingly based on the dc link voltage of the HVDC transmission system and the selected nominal voltage for said cells. The first charging mode S1011, which is illustrated in Fig. 8, includes:

I) applying a charging voltage to the energy supporting device 100 to charge cells 1010 of said first string 1011 and cells 1020 of said second string 1021;

II) when cells 1010 of said first string 1011 have reached a predetermined voltage lower than nominal voltage, bypassing said second string 1021;

III) continuing charging cells 1010 of said first string 1011;

IV) stopping said first charging mode when all cells 1010 of said first string 1011 have been charged to nominal voltage.

Specifically, when charging said uncontrolled cells 1010 and controlled cells 1020 according to the first charging mode, cells 1010, 1020 will initially charge to the predetermined voltage lower than nominal voltage. Said predetermined voltage may be a pre-charge voltage. The pre-charge voltage will be directly proportional to the total number of cells (controlled + uncontrolled):

$$V_C^{all} = \frac{V_{hvdc}}{n_{C,HESS-contr.} + n_{C,HESS-uncontr.}} \leq V_{nom} = V_{nom}^{C,HESS-contr.}$$

$$V_C^{all} = \cdots = V_{nom}^{C,HESS-controlled} = 0.8\,kV \text{ (acc. non-limiting example above)}$$

When the cells have been charged up to said predetermined voltage, the controlled cells are bypassed. The first charging mode continues by charging the uncontrolled cells up to the nominal voltage (1.0 kV in the example). Since the controlled cells have been bypassed, the controlled cells remain at a lower voltage (0.8 kV in the example). When all uncontrolled cells have been charged to nominal voltage, the charging process stops. This may be done by controlling current using the controlled cells.

$$V_C^{uncontr.} = \frac{V_{hvdc}}{n_{C,HESS-contr.}} = V_{nom} = V_{nom}^{C,HESS-uncontr.}$$

$$V_C^{uncontrolled} = \cdots = 1.0\,kV \text{ (acc. non-limiting example above)}$$

$$V_C^{controlled} = \frac{V_{hvdc}}{n_{C,HESS-contr.} + n_{C,HESS-uncontr.}} < V_{nom} = V_{nom}^{C,HESS-contr.}$$

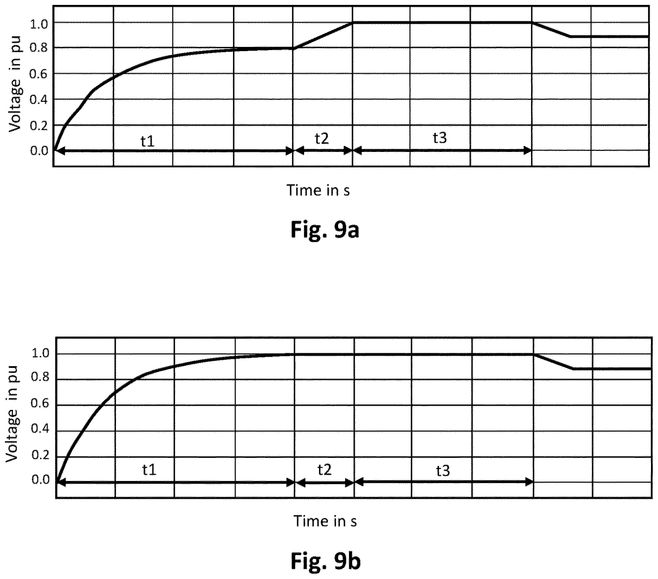

Fig. 9a illustrates an uncontrolled cell as it is being charged according to the first charging mode. During a first time period t1, the uncontrolled cell is charged up to 0.8 pu (0.8 kV = 0.8 pu with 0.571 kA base). During a second time period t2, the uncontrolled cell is charged up to 1.0 pu (1.0 kV = 1.0 pu with 0.571 kA base). During a third time period t3, the uncontrolled cell is in idle mode.

Meanwhile, Fig. 9b illustrates a controlled cell as it is being charged according to the first charging mode. During the first time period t1, the controlled cell is charged up to 1 pu (0.8 kV = 1 pu with 0.571 kA base). During the second time period t2, the controlled cell is bypassed and is not charged further. During a third time period t3, the controlled cell is in idle mode.

Second charging mode

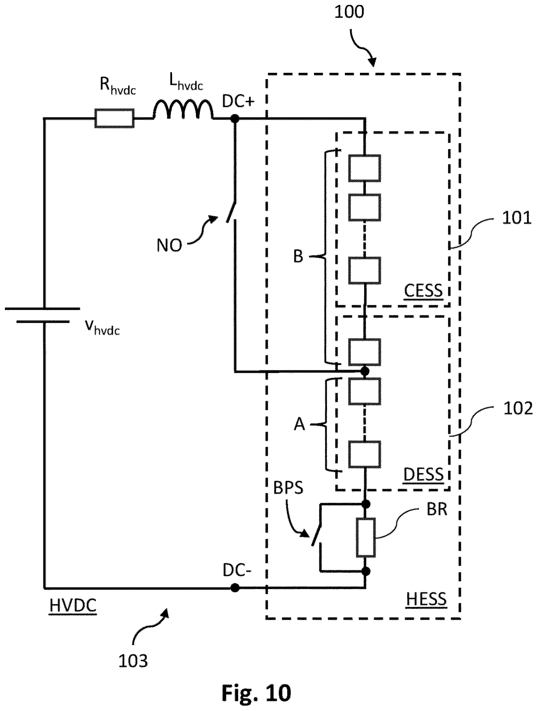

One design choice is to have the same nominal voltage for the uncontrolled cells and the controlled cells. In such a case, a circuit breaker NO may be used during charging of the energy supporting device, see Fig. 10. The circuit breaker NO is at least electrically connectable between a first connection terminal DC+ of said energy supporting device 100 and a first auxiliary connection terminal at least electrically connectable between any two cells 1020 of said second string 1021 or between said first string 1011 and said second string 1021.

The circuit breaker NO may be connected to bypass a part of the combined string including the first string 1011 and the second string 1021, wherein said part may include one or more controlled cells or exclude all controlled cells, depending on the design and the total number of controlled and uncontrolled cells. The remainder of said combined string and said part may be represented by a first group A and a second group B, respectively. The second charging mode S1012 includes:

I) providing the first group A of cells including a contiguous selection of cells 1020 of said second string 1021 and the second group B of cells including cells 1010 of said first string 1011 and the cells 1020 of the second string 1021 not in said first group A;

II) providing said circuit breaker NO in a closed state so as to bypass the second group B of cells;

III) applying a charging voltage to the energy supporting device 100 to charge the first group A of cells;

IV) when cells 1010 of said first group A have reached a predetermined voltage lower than nominal voltage (and preferably at zero current), opening the circuit breaker NO;

V) charging the second group B of cells;

VI) stopping said second charging mode when all cells of the first group A of cells and the second group B of cells have been charged to nominal voltage.

Thereby, when the circuit breaker NO is closed and the HVDC voltage is applied, the controlled cells in the first group A are charged to said predetermined voltage being less than the nominal voltage. As a non-limiting example, said nominal voltage may be 1.0 kV (in which case said predetermined voltage is < 1 kV). Once the cells of the first group A have been charged to said predetermined voltage, and preferably at zero current, the circuit breaker NO is opened. Then cells of the second group B are charged to nominal voltage (e.g., 1 kV). This charging process may be controlled with the charged controlled cells of the first group A. When the voltage of all controlled cells and all uncontrolled cells reaches the nominal voltage, the charging process according to the second charging mode stops.

Third charging mode

Another possible charging mode is to use auxiliary switches (relays) and discharge resistors of the uncontrolled cells shown in Figure 4b to carry out a controlled pre-charging and charging process of the controlled and uncontrolled cells. Such a third charging mode S1013 includes:

I) controlling a control circuit of cells 1010 of the first string 1011 to bypass said cells 1010 of the first string 1011;

II) applying a charging voltage to the energy supporting device 100 to charge cells 1020 of the second string 1021;

III) when cells 1020 of said second string 1021 have been charged to nominal voltage, controlling said control circuit of each cell 1010 of the first string 1011 to connect said cells 1010 of the first string 1011;

IV) continuing charging said cells 1010 of said first string 1011;

V) stopping said second charging mode when all cells of said first string 1011 have been charged to nominal voltage.

Mode combinations

The first charging mode and the second charging mode may be combined. The first charging mode and the third charging mode may be combined. The second charging mode and the third charging mode may be combined. The first charging mode, the second charging mode, and the third charging mode may be combined.

Fault case

At the event of dc side short circuit faults, the second energy supporting arrangement (e.g., DESS) could be bypassed by blocking switch pulses. Diodes provide the current flow paths in both cases (half-bridge configuration and full-bridge configuration), but the first energy supporting arrangement (e.g., CESS) will contribute to fault feed. Considering the worst-case scenario of low impedance or dead short circuit fault, a fault feed amplitude is limited by the equivalent energy storage resource, ESR, of energy storage system and the rate of rise of fault current is limited by the dc inductance and equivalent energy storage inductance, ESL. Additionally, the stray impedance of bus bars used for connecting energy storage units add to the total resistance of energy storage system. Thus, the fault current amplitude ($i_{dc,fault}$) for a dead short circuit can be estimated by:

$$i_{dc,fault} = \frac{V_{CESS}}{ESR_{CESS} + \text{stray resistance}}$$

It is noteworthy that the super-capacitors available in the market are equipped to handle the terminal short circuit currents (isc) for certain defined durations, as given below:

$$i_{SC} = \frac{V_{CESS}}{ESR_{CESS}}$$

Since $i_{dc\_fault} <$ isc, it can be concluded that the proposed HESS topology can handle even the worst-case short circuit currents. Furthermore, a dc inductor may help in alleviating the fault impact.

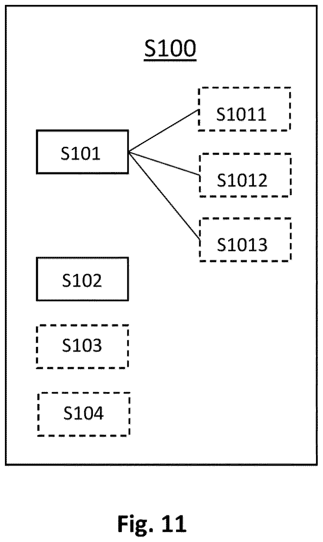

Fig. 11 shows a flowchart of a method of providing energy support for a power transmission system, such as a medium voltage direct current, MVDC, transmission system or a high voltage direct current, HVDC, transmission system, wherein said energy support is provided by means of an energy supporting device 100 according to the present disclosure. The method S100 comprises: dissipating S101 a surplus of electrical energy from the power transmission system by operating said energy supporting device 100 in at least one charging mode of said at least one charging mode; releasing S102 electrical energy to the power transmission system by operating said energy supporting device 100 in said energy releasing mode. Said at least one charging mode may include said first charging mode S1011 and/or said second charging mode S1012 and/or said third charging mode S1013. As a further option, said method S100 may include operating the energy supporting device 100 in said idle mode S103 and/or said dissipation mode S104.

While the foregoing is directed to embodiments of the disclosure, other and further embodiments may be devised without parting from the inventive concept discussed herein. The scope of the invention is however determined by the claims.

**Claims**

1. An energy supporting device (100) for a power transmission system, the energy supporting device (100) comprising:

   - a first energy supporting arrangement (101) including at least a first string (1011) of two or more cells (1010) connected in series, wherein each cell of said two or more cells (1010) of the first string (1011) is configured to provide a natural cell voltage;
   - a second energy supporting arrangement (102) including at least a second string (1021) of two or more cells (1020) connected in series, wherein each cell of said two or more cells (1020) of the second string (1021) comprises a power electronics building block (PEBB) configured to enable the energy supporting device to provide voltage regulation,
   - wherein said first string (1011) and said second string (1021) are at least electrically connectable in series,
   - wherein said energy supporting device (100) is configured to be operated in:

     ◦ at least one charging mode, in which at least one cell (1010) of the first string (1011) and/or at least one cell (1020) of the second string (1021) are/is receiving electrical energy from the power transmission system, and
     ◦ an energy releasing mode, in which at least one cell (1010) of the first string (1011) and/or at least one cell (1020) of the second string (1021) are/is discharging electrical energy to the power transmission system,

   - wherein the energy supporting device (100) is configured to provide said voltage regulation at least temporarily when said energy supporting device (100) is operated in at least one of said at least one charging mode.

2. The energy supporting device (100) according to claim 1, further comprising:

   - a braking resistor (BR),
   - a bypass switch (BPS) arranged in parallel with the braking resistor (BR),

     wherein the parallel arrangement of said braking resistor (BR) and said bypass switch (BPS) is arranged in series with said first energy supporting arrangement (101) and/or said second energy supporting arrangement (102),
     wherein said energy supporting device (100) is configured to operate in:

   - a dissipation mode, in which the bypass switch (BPS) is in an open state for allowing the braking resistor (BR) to dissipate electrical energy from the power transmission system.

3. The energy supporting device (100) according to any one of the preceding claims, wherein at least one cell (1010) of said first energy supporting arrangement (101) and/or at least one cell (1020) of said second energy supporting arrangement (102) comprises:

   - a control circuit configured for enabling isolation and/or discharge and/or bypassing of said at least one cell (1010, 1020).

4. The energy supporting device (100) according to any one of the preceding claims, wherein the energy supporting device (100) is further configured to operate in:

   - an idle mode, in which the power electronics building block (PEBB) of at least one cell of the second energy supporting arrangement (102) is configured to block electrical energy from the power transmission system from passing through the energy supporting device (100).

5. The energy supporting device (100) according to any of the preceding claims, wherein said power electronics building block (PEBB) has a half-bridge configuration or a full-bridge configuration.

6. The energy supporting device (100) according to any one of the preceding claims, wherein the power electronics building block (PEBB) includes:

   - an energy storage unit (M) at least electrically connectable between a first DC side terminal (CT2+) and a second DC side terminal (CT2-) of the power electronics building block (PEBB), and/or
   - a cell bypass switch (Sw1) at least electrically connectable between a first AC side terminal (CT1+) and a second AC side terminal (CT1-).

7. The energy supporting device (100) according to any one of the preceding claims, wherein at least one cell (1010) of said first string (1011) and/or at least one cell (1020) of said second string (1021) comprises an energy storage module (M1, M2), which energy storage module (M1, M2) includes at least one of: a capacitor, a super-capacitor, a battery, or a super-battery.

8. The energy supporting device (100) according to any one preceding claims, further comprising a circuit breaker (NO) at least electrically connectable between a first connection terminal (DC+) of said energy supporting device (100) and a first auxiliary connection terminal at least electrically connectable between any two cells (1020) of said second string (1021) or between said first string (1011) and said second string (1021).

9. A power transmission system comprising at least one energy supporting device (100) according to any one of the preceding claims, wherein said at least one energy supporting device (100) is at least electrically connectable to said power transmission system so as to be able to operate in:

   - said at least one charging mode,
   - said energy release mode,

   and, optionally in at least one of:

   - said dissipation mode, and/or
   - said idle mode.

10. A power transmission system according to claim 9, comprising:

    - a control device (104) configured to control the power electronics building block (PEBB), and
    - at least one sensor (105) configured to sense a current and/or a voltage of the power transmission system, said at least one sensor being at least communicatively couplable to said control device (104),

    wherein the control device (104) is further configured to cause the energy supporting device (100) to assume one of the modes based on the received current and/or voltage of the power transmission system.

11. Method (S100) of providing energy support for a power transmission system, wherein said energy support is provided by means of an energy supporting device (100) according to any of claims 1-9, the method comprising:

    - dissipating (S101) a surplus of electrical energy from the power transmission system by operating said energy supporting device (100) in at least one charging mode of said at least one charging mode;
    - releasing (S102) electrical energy to the power transmission system by operating said energy supporting device (100) in said energy releasing mode.

12. Method according to claim 11, wherein said at least one charging mode comprises a first charging mode (S1011) including:

- applying a charging voltage to the energy supporting device (100) to charge cells (1010) of said first string (1011) and cells (1020) of said second string (1021);
- when cells (1010) of said first string (1011) have reached a predetermined voltage lower than nominal voltage, bypassing said second string (1021);
- continuing charging cells (1010) of said first string (1011);
- stopping said first charging mode when all cells (1010) of said first string (1011) have been charged to nominal voltage.

13. Method according to any one of claims 11-12, wherein said at least one charging mode comprises a second charging mode (S1012) including:

- providing a first group (A) of cells including a contiguous selection of cells (1020) of said second string (1021) and a second group (B) of cells including cells (1010) of said first string (1011) and the cells (1020) of the second string (1021) not in said first group;
- bypassing the second group (B) of cells;
- applying a charging voltage to the energy supporting device (100) to charge the first group (A) of cells to nominal voltage;
- when the charging current has reached zero, connecting the second group of cells;
- charging the second group (B) of cells; and
- stopping said second charging mode when all cells of the first group (A) of cells and the second group (B) of cells have been charged to nominal voltage.

14. Method according to any of claims 11-13, wherein at least one cell (1010) of said first energy supporting arrangement (101) and/or at least one cell (1020) of said second energy supporting arrangement (102) comprises a control circuit configured for enabling isolation and/or discharge and/or bypassing of said at least one cell (1010, 1020), wherein said at least one charging mode comprises a third charging mode (S1013) including:

- controlling a control circuit of cells (1010) of the first string (1011) to bypass said cells (1010) of the first string (1011);
- applying a charging voltage to the energy supporting device (100) to charge cells (1020) of the second string (1021);
- when cells (1020) of said second string (1021) have been charged to nominal voltage, controlling said control circuit of each cell (1010) of the first string (1011) to connect said cells (1010) of the first string (1011);
- continuing charging said cells (1010) of said first string (1011);
- stopping said second charging mode when all cells of said first string (1011) have been charged to nominal voltage.

15. Control device (105) configured to perform the method according to any of claims 11-14.

**Fig. 1**

**Fig. 2a**

**Fig. 2b**

**Fig. 3a**

**Fig. 3b**

**Fig. 4a**

**Fig. 4b**

**Fig. 5a**

**Fig. 5b**

**Fig. 5c**

**Fig. 6**

**Fig. 7a**

**Fig. 7b**

**Fig. 8**

Fig. 9a

Fig. 9b

**Fig. 10**

**Fig. 11**

Europäisches
Patentamt

European
Patent Office

Office européen
des brevets

# EUROPEAN SEARCH REPORT

**Application Number**

EP 24 19 5556

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/170658 A1 (TENGNER TOMAS [SE] ET AL) 15 June 2017 (2017-06-15) | 1,3-5, 7-11,15 | INV. H02J7/00 |
| Y | * figures 4a,4b,6 * | 2,6 | H02J7/34 |
| A | * paragraphs [0004], [0013], [0029], [0031] - [0041], [0050] * | 12-14 | H02J3/36 H02J3/32 H02M7/483 |
| | ----- | | |
| Y,D | WO 2022/258141 A1 (HITACHI ENERGY SWITZERLAND AG [CH]) 15 December 2022 (2022-12-15) * figures 1,2a * * page 2, lines 16-20 * | 2,6 | |
| | ----- | | |

**TECHNICAL FIELDS SEARCHED (IPC)**

H02J
H02M

The present search report has been drawn up for all claims

| Place of search | Date of completion of the search | Examiner |
|---|---|---|
| Munich | 13 February 2025 | Zettler, Karl-Rudolf |

EPO FORM 1503 03.82 (P04C01)

## ANNEX TO THE EUROPEAN SEARCH REPORT
## ON EUROPEAN PATENT APPLICATION NO.

EP 24 19 5556

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | | Publication date |
|---|---|---|---|---|
| US 2017170658 A1 | 15-06-2017 | CN | 106030955 A | 12-10-2016 |
| | | EP | 3108560 A1 | 28-12-2016 |
| | | US | 2017170658 A1 | 15-06-2017 |
| | | WO | 2015124176 A1 | 27-08-2015 |
| WO 2022258141 A1 | 15-12-2022 | CN | 117480702 A | 30-01-2024 |
| | | EP | 4327430 A1 | 28-02-2024 |
| | | US | 2024266834 A1 | 08-08-2024 |
| | | US | 2024380211 A1 | 14-11-2024 |
| | | WO | 2022258141 A1 | 15-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022258141 A1

**Non-patent literature cited in the description**

- **PAEZ et al.** *Overview of DC-DC Converters Dedicated to HVDC Grids*

- **JUAN DAVID PAEZ** ; **DAVID FREY** ; **JOSE MANEIRO** ; **SEDDIK BACHA** ; **PIOTR DWORAKOWSKI**. *IEEE TRANSACTIONS ON POWER DELIVERY*, February 2019, vol. 34 (1)